(19) Europäisches Patentamt
European Patent Office
Office européen des brevets

(11) **EP 2 549 665 B1**

(12) **EUROPEAN PATENT SPECIFICATION**

(45) Date of publication and mention
of the grant of the patent:
**10.12.2014 Bulletin 2014/50**

(51) Int Cl.:
*H04B 10/071* *(2013.01)*    *G01M 11/00* *(2006.01)*
*H04B 10/50* *(2013.01)*

(21) Application number: **11173900.9**

(22) Date of filing: **14.07.2011**

(54) **OTDR method and system**

OTDR Verfahren und Vorrichtung

Procédé et methode OTDR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.01.2013 Bulletin 2013/04**

(73) Proprietor: **Xieon Networks S.à.r.l.
1748 Luxemburg (LU)**

(72) Inventor: **Rohde, Harald
81673 Munich (DE)**

(74) Representative: **Lucke, Andreas et al
Boehmert & Boehmert
Anwaltspartnerschaft mbB
Patentanwälte Rechtsanwälte
Pettenkoferstrasse 20-22
80336 München (DE)**

(56) References cited:
**EP-A1- 2 337 240     US-A- 5 179 420
US-A- 5 729 369**

• **SCHUH R E ET AL: "Single channel polarimetric
OTDR for measurement of backscattered SOP
evolution along a fibre with twist", ELECTRONICS
LETTERS, IEE STEVENAGE, GB, vol. 33, no. 25,
4 December 1997 (1997-12-04), pages 2153-2154,
XP006008271, ISSN: 0013-5194, DOI: 10.1049/EL:
19971426**

**Description**

The invention relates to a method and to a device for processing optical signals in an optical network element, in particular in an optical line terminal (OLT). Also, a system comprising at least one such device is suggested.

Data transmission of spectrally densely spaced wavelengths is utilized by applications as Next Generation Optical Access (NGOA) systems allowing high data rates of, e.g., 100 Gbit/s.

An optical time-domain reflectometer (OTDR) is an optoelectronic instrument used to characterize an optical fiber (see, e.g., http://en.wikipedia.org/wiki/Otdr). An OTDR injects a series of optical pulses into the fiber under test. It also extracts, from the same end of the fiber, light that is scattered (Rayleigh Backscatter) or reflected back from points along the fiber. This is equivalent to the way that an electronic time-domain reflectometer measures reflections caused by changes in the impedance of the cable under test. The strength of the return pulses is measured and integrated as a function of time, and is plotted as a function of fiber length.

An OTDR may be used for estimating the fiber's length and overall attenuation, including splice and mated-connector losses. It may also be used to locate faults, such as breaks, and to measure optical return loss. To measure the attenuation of multiple fibers, it is advisable to test from each end and then average the results, however this considerable extra work is contrary to the common claim that testing can be performed from only one end of the fiber.

OTDRs are commonly used to characterize the loss and length of fibers as they go from initial manufacture, through to cabling, warehousing while wound on a drum, installation and then splicing. The last application of installation testing is more challenging, since this can be over extremely long distances, or multiple splices spaced at short distances, or fibers with different optical characteristics joined together. OTDR test results are often carefully stored in case of later fiber failure or warranty claims. Fiber failures can be very expensive, both in terms of the direct cost of repair, and consequential loss of service.

OTDRs are also commonly used for fault finding on installed systems. In this case, reference to the installation OTDR trace is very useful, to determine where changes have occurred. Use of an OTDR for fault finding may require an experienced operator who is able to correctly judge the appropriate instrument settings to locate a problem accurately. This is particularly so in cases involving long distance, closely spaced splices or connectors, or PONs.

OTDRs are usually expensive, separate devices which are used to find an error in the fiber optical network.

It is a disadvantage that the utilization of an OTDR is not at all seamless and interrupts the data service. Also, it is a significant effort to use the OTDR on the various optical fibers.

EP 2337240 AI discloses a method for processing optical signals in an optical network element, wherein said optical network element is arranged for conveying data via several output wavelengths, wherein each output wavelength is assigned to one channel and wherein an OTDR event is generated on at least one of said output wavelengths.

Further, US 5,729,369 discloses a multifrequency light source generating a signal having a plurality of discrete and temporarily spaced wavelengths. The wavelengths are modulated with data for transmission in an optical medium. The multifrequency light source is cascaded with a power splitter for dividing the generated signal in a plurality of multifrequency signals of substantially equal power.

EP 2 209 226 AI discloses an ONU comprising a tunable laser that is used as a local oscillator in a homodyne/heterodyne receiver as well as a part of a sender for upstream transmission signals. In normal operation, the signal generated at the local oscillator laser is modulated via a modulator producing upstream signals to be conveyed via an optical fiber. An incoming optical signal is fed to a receiver using the same tunable laser as the local oscillator. The tunable laser can be tuned to receive a certain wavelength and can be tuned to emit a certain wavelength. In addition, during an OTDR operation, the tunable laser can be tuned to a fixed wavelength and is directly modulated with a single short pulse signal. The homodyne/heterodyne receiver receives a reflected signal which can then be analyzed directly for attenuation and/or fiber breaks or failures.

The **problem** to be solved is to provide an efficient solution to monitor the quality of a fiber in an optical network.

This problem is solved according to the features of the independent claims. Further embodiments result from the depending claims.

In order to overcome this problem, a method for processing optical signals in an optical network element according to claim 1 is provided.

It is noted that the reflection of the light based on the OTDR event is determined by a coherent receiver which may in particular use light of the single laser source as an oscillator.

This allows an effective, seamless, full-time monitoring at considerably low costs without interfering with existing traffic. Thereby, the operators of the optical network may monitor degradation of a fiber and could counteract before an actual fiber failure occurs.

In an embodiment, the OTDR event comprises at least one short light pulse generated on the at least one wavelength.

The OTDR event may in particular comprise a simple or complex sequence of pulses (or a pattern of pulses) of identical or different intensity. A receiver may search for the sequence or pattern by means of autocorrelation.

In another embodiment, the reflection of the light is determined at a receiver of the optical network element.

The optical network element may in particular utilize a light source for optical modulation of an outgoing signal as well as on an incoming optical signal.

In a further embodiment, the OTDR event is generated on a wavelength for which the corresponding addressee is switched off.

The addressee may be an additional optical component connected via the fiber to the optical component, wherein the additional optical component uses a channel (corresponding to at least one wavelength). The additional optical component may be an optical network unit (ONU).

In a next embodiment, the OTDR event is generated on a wavelength that is carrying an amount of traffic below a predefined threshold.

Hence, if a wavelength is not carrying full load, the OTDR event can be sent to the addressee.

It is also an embodiment that the OTDR event is generated after the addressee has been informed that about the OTDR event, i.e. that an OTDR event will be transmitted.

Hence, if the addressee (e.g., an ONU) is not switched off, the optical network component (e.g., an ONU) may signal the upcoming OTDR event to this ONU, advising it to ignore the downstream data for a predetermined amount of time, e.g., the next few milliseconds.

Pursuant to another embodiment,

- an OTDR event is generated on two wavelengths,
- a (chromatic) dispersion is determined based on a delay between the reflections of the light based on the OTDR event.

According to an embodiment, the two wavelengths comprise a first wavelength of high frequency and a second wavelength of low frequency.

It is in particular an option that wavelengths on both sides of the spectrum, e.g., a lowest and a highest frequency, are (e.g. simultaneously) provided with an OTDR pulse.

According to another embodiment, a birefringence is determined based on the reflection of the light based on the OTDR event.

As the optical network element comprises a polarization diversity receiver, it has all information available to log a temporal trace of back reflections of both polarizations. Based on this information, the birefringence of the fiber, in particular in view of the fiber length, can be determined.

In yet another embodiment,

- an OTDR event is generated on three wavelengths,
- a second order chromatic dispersion is determined based on the reflections of the light based on the OTDR event.

The problem stated above is also solved by a device comprising a processing unit that is arranged such that the method as described herein is executable thereon.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The problem is in particular solved by an optical network element according to claim 11.

According to an embodiment, said optical network element is a centralized optical network element, in particular an optical line terminal connectable to at least one optical network unit.

Furthermore, the problem stated above is solved by a communication system comprising at least one of the devices as described herein.

Embodiments of the invention are shown and illustrated in the following figures:

Fig.1 shows an exemplary diagram of an OLT with an N-carrier transceiver;

Fig.2 shows an exemplary "Optical Out" signal that is conveyed towards several ONUs, i.e. in downlink direction.

The approach presented is in particular applied in optical communication systems with an ultra dense wavelength multiplexing scheme where the outgoing and incoming wavelengths are interleaved as, e.g., in an NGOA system. Promising applications are, e.g., ultra dense wavelength grid optical access systems (also referred to as NGOA) providing for each subscriber or user (or service) a separate wavelength (i.e. at least one wavelength range). Also, a particular wavelength (i.e. wavelength range) can be assigned to at least one subscriber, user or service.

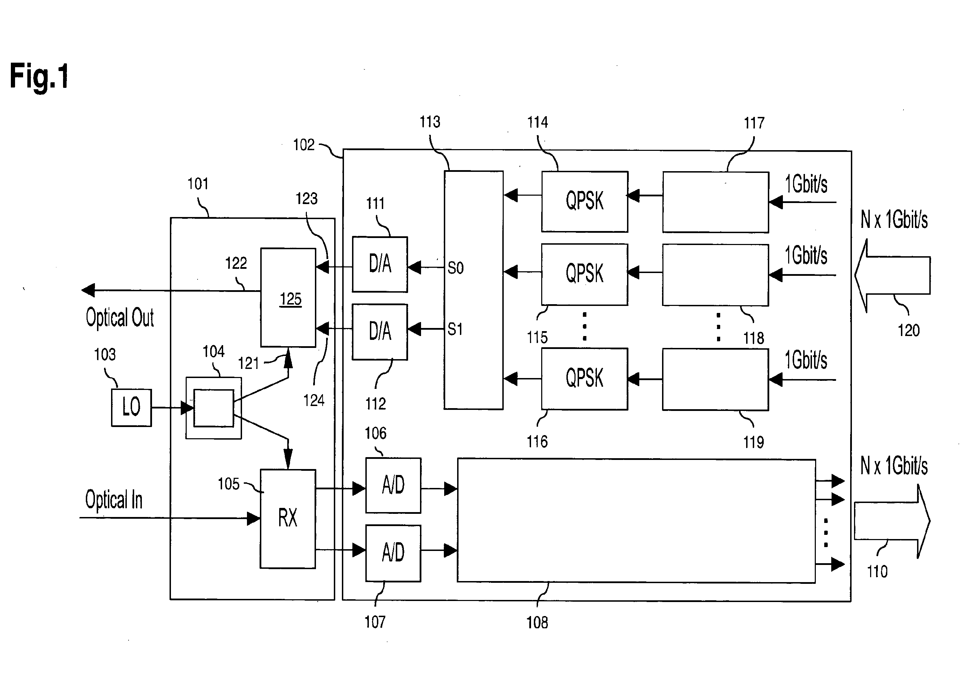

**Fig.1** shows an exemplary diagram of an OLT with an N-carrier transceiver. The transceiver comprises a transceiver module 101 and a digital processing unit 102. An optical input signal "Optical In" is conveyed to a receiver 105. A laser serves as a local oscillator LO 103 and conveys a signal via a splitter 104 to a modulator structure 125 and to the receiver 105. The receiver 105 conveys two analog signals to A/D converters 106, 107. The digital signal provided by the A/D converters 106, 107 is further processed by a unit 108 into N digital streams (or channels) at a data rate amounting to, e.g., 1Gbit/s. The unit 108 provides in particular framing, a general frame procedure, a forward error correction, OAM services, and/or a broadcast capability.

In the opposite direction for producing an optical output signal "Optical Out" 122, N digital data streams (or channels) 120 are each fed to a processing unit 117 to 119 (each providing, e.g., framing, a general frame procedure, a forward error correction, OAM services and/or a broadcast capability) and further via a QPSK modulation unit 114 to 116 to a digital up-converter 113 providing signals S0 and S1 that are each converted to an analog signal by D/A converters 111, 112 and are forwarded to the modulation structure 125 as analog electrical signals 123 and 124. The modulation structure 125 provides the optical output signal "Optical Out" 122 utilizing the input signal 121 from the local oscillator 103.

A low pass filter may be located between the D/A converter 111 and the modulation structure 125 as well as between the D/A converter 111 and the modulation structure 125.

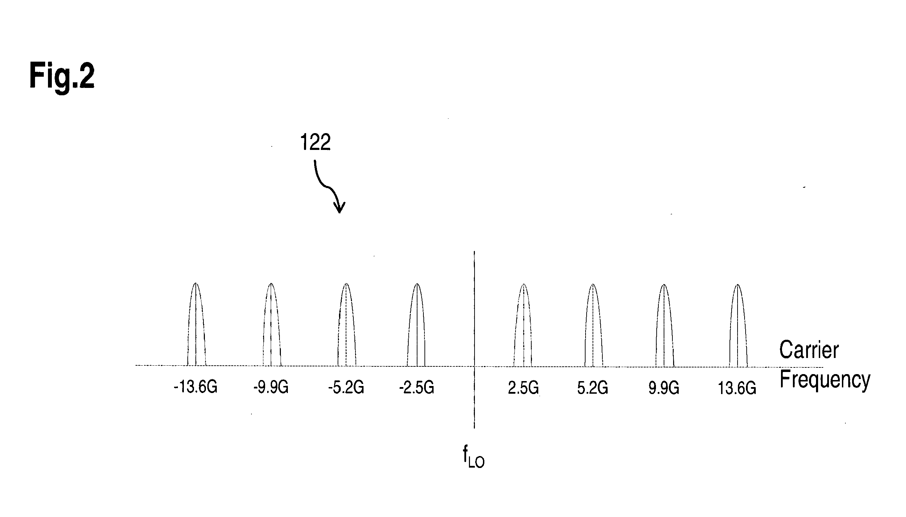

**Fig.2** shows an exemplary "Optical Out" signal 122 that is conveyed towards several ONUs, i.e. in downlink direction. A bandwidth can be used around a given carrier frequency to convey data towards the ONUs. According to the NGOA concept, e.g., each ONU may have a carrier frequency of its own.

In the OLT, multiple downstream wavelengths are generated at various such carrier frequencies (frequencies amounting to -13.6GHz, -9.9GHz, -5.2GHz, -2.5GHz, 2.5GHz, 5.2GHz, 9.9GHz and 13.6GHz according to Fig.2) from a single laser source, i.e. said local oscillator LO 103. The frequencies may in particular amount to a multiple of a base frequency bf=933.12MHz, i.e.

$$F = \{-14\ -11\ -8\ -5\ -2\ 2\ 5\ 8\ 11\ 14\} * bf.$$

Under the assumption that not all of the N wavelengths (carrier frequencies) are under full load all the time, any wavelength

- for which the corresponding ONU is switched off or
- for which the corresponding ONU is under low load, can be used as an OTDR source.

As the wavelengths are generated digitally by modulating a single laser source, the respective electrical sub-carrier can be switched off for a few milliseconds and instead be used to generate a ultra short optical pulse (also referred to as OTDR event). If the connected ONU is not switched off, the OLT may signal an upcoming OTDR event to this ONU, advising it to ignore the downstream data for a predetermined amount of time, e.g., the next few milliseconds.

As all the other downstream wavelengths keep unaffected, the downstream pulse does not affect the booster EDFA (fiber amplifier) at the output of the system in downlink direction. EDFAs are not suited for single pulses without any other load but in this configuration, the EDFA is sufficiently loaded so that a single pulse does not harm the EDFA.

As the generating laser is used as a local oscillator for the coherent detection scheme as well, and as NGOA is a single fiber system, the reflected pulse will be detected at the OLT receiver 105.

Hence, no major additional hardware is required. Some gates in the receiving ASIC to detect an incoming signal in the band which corresponds to the pulse wavelength may suffice.

As an option, a dispersion profile of the optical fiber network can be determined. If the wavelengths on both sides of the spectrum, i.e. the lowest and the highest frequency, are simultaneously provided with an OTDR pulse, the measured OTDR reflection of one wavelength will be slightly delayed with regard to the other wavelength. Based on this delay, a chromatic dispersion profile of the fiber can be determined: At a given distance (measured by the mean time of the two signals), a dispersion value D can be calculated by dividing the time difference by the spectral distance, resulting in a value of

$$D = X\ ps/nm*km,$$

The dispersion is specified with units of ps/(nmkm), i.e. picoseconds per nanometer wavelength change and kilometer propagation distance.

Another option of the solution presented is a measurement of a birefringence (also referred to as double refraction) of the fiber. As the OLT receiver 105 is a polarization diversity receiver, it has all information required to log a temporal trace of back reflections of both polarizations. Based on this information, the birefringence of the fiber, in particular in view of the fiber length, can be determined.

It is a further option to use three OTDR wavelengths to determine a second order chromatic dispersion.

Three wavelengths result in three elapse times based on a particular distance. A parable can be determined based on the three elapse time/wavelengths points, the curvature of the parable determines the second order dispersion.

As an alternative, a dispersion of a pair of wavelengths is determined as well as a dispersion of another pair of wavelengths, e.g., a channel at -14*bf and -2*bf and a channel at -2*bf and 14*bf. The second order dispersion can then be determined by dividing the difference of the dispersions by the distance of the mean frequencies. In this example, the mean frequencies amount to

$$(-14*bf - 2*bf)/2 = -8*bf$$

and

$$(-2*bf + 14*bf)/2 = 6*bf.$$

The difference amounts to 14*bf.

The solution presented has in particular the advantage that no additional major hardware is required. The approach can be realized via software and/or via a few additional gates in an ASIC. The invention provides the means for a seamless, in-line, full-time monitoring of the fiber network at very little additional cost. The approach does not interfere with data traffic, which is a significant difference compared to external prior art OTDRs. The operators of the optical network can use the solution presented to continuously monitor the optical network and become aware of imminent failures or degradation effects. Hence, the operators may take counteractions before a network failure actually occurs.

**List of Abbreviations:**

A/D       Analog-to-Digital
ASIC      Application-Specific Integrated Circuit
D/A       Digital-to-Analog
EDFA      Erbium Doped Fiber Amplifier
NGOA      Next Generation Optical Network
OAM       Operation Administration and Maintenance
OLT       Optical Line Terminal
ONU       Optical Network Unit
OTDR      Optical Time Domain Reflectometer
PON       Passive Optical Network

**Claims**

1. A method for processing optical signals in an optical network element,
   wherein said optical network element is arranged for conveying data via several output wavelengths, wherein each output wavelength is assigned to one channel and wherein an OTDR event is generated by said optical network element on at least one of said output wavelengths,
   wherein said network element comprises

   • a single local oscillator laser source (103) for emitting light at an LO frequency ($f_{LO}$),
   • a modulation structure (125) for providing a plurality of optical output signals at said output wavelengths by modulating the light emitted by said local oscillator (103) at said LO frequency ($f_{LO}$), and

• a coherent receiver (105) for receiving a plurality of optical input signals at corresponding input wavelengths using said local oscillator (103) for the coherent detection,

and wherein

a reflection of the light based on the OTDR event is determined using the same coherent receiver (105) as for receiving said optical input signals.

2. The method according to claim 1, wherein the OTDR event comprises at least one light pulse generated on the at least one wavelength.

3. The method according to any of the preceding claims, wherein the optical network element is an optical line terminal.

4. The method according to any of the preceding claims, wherein the OTDR event is generated on a wavelength for which the corresponding addressee is switched off.

5. The method according to claims 1 to 3, wherein the OTDR event is generated on a wavelength that is carrying an amount of traffic below a predefined threshold.

6. The method according to claim 5, wherein the OTDR event is generated after the addressee has been informed that the OTDR event will be transmitted.

7. The method according to any of the preceding claims,

   - wherein an OTDR event is generated on two wavelengths,
   - wherein a dispersion is determined based on a delay between the reflections of the light based on the OTDR event.

8. The method according to claim 7, wherein the two wavelengths comprise a first wavelength of higher frequency and a second wavelength of lower frequency.

9. The method according to any of the preceding claims, wherein a birefringence is determined based on the reflection of the light based on the OTDR event.

10. The method according to any of the preceding claims,

    - wherein an OTDR event is generated on three wavelengths,
    - wherein a second order chromatic dispersion is determined based on the reflections of the light based on the OTDR event.

11. An optical network element comprising a processing unit that is arranged for conveying data via several output wavelengths, wherein each output wavelength is assigned to one channel, and for generating an OTDR event on at least one of said output wavelengths, wherein said network element comprises

    • a single local oscillator laser source (103) for emitting light at an LO frequency ($f_{LO}$),
    • a modulation structure (125) for providing a plurality of optical output signals at said output wavelengths by modulating the light emitted by said local oscillator (103) at said LO frequency ($f_{LO}$), and
    • a coherent receiver (105) for receiving a plurality of optical input signals at corresponding input wavelengths using said local oscillator (103) for the coherent detection scheme,

    and wherein said optical network element is arranged for determining a reflection of the light based on the OTDR event using the same coherent receiver (105) as for receiving said optical input signals.

12. The optical network element according to claim 11, wherein said optical network element is a centralized optical network element, in particular an optical line terminal connectable to at least one optical network unit.

13. A communication system comprising at least one device according to any of claims 1 or 12.

**Patentansprüche**

1. Verfahren zur Verarbeitung von optischen Signalen in einem optischen Netzwerkelement, wobei das optische Netzwerkelement eingerichtet ist, Daten mithilfe von mehreren Ausgangswellenlängen zu übertragen, wobei jede Ausgangswellenlänge einem Kanal zugeordnet ist und wobei ein OTDR (Optical-Time-Domain-Reflectometry)-Ereignis, bzw. optisches Zeitbereichsreflektometrie, von dem genannten optischen Netzwerkelement auf zumindest einer der genannten Ausgangswellenlängen erzeugt wird, wobei das optische Netzwerkelement folgendes umfasst:

   - eine Einzel-Lokaloszillator-Laserquelle (103) zum Emittieren von Licht mit einer LO-Frequenz ($f_{LO}$),
   - eine Modulationsstruktur (125) zum Bereitstellen mehrerer optischer Ausgangssignale mit den genannten Ausgangswellenlängen, indem das durch den genannten Lokaloszillator (103) mit der genannten LO-Frequenz ($f_{LO}$) emittierte Licht moduliert wird, und
   - einen kohärenten Empfänger (105) zum Empfangen mehrerer optischer Eingangssignale mit zugehörigen Eingangswellenlängen unter Verwendung des genannten Lokaloszillators (103) für die kohärente Detektion, und wobei
   - eine Reflexion des auf dem OTDR-Ereignis basierenden Lichts unter Verwendung desselben kohärenten Empfängers (105), wie er zum Empfangen der genannten optischen Eingangssignale verwendet wird, bestimmt wird.

2. Verfahren nach Anspruch 1, wobei das OTDR-Ereignis zumindest einen Lichtpuls umfasst, der mit der zumindest einen Wellenlänge erzeugt wird.

3. Verfahren nach einem der vorhergehenden Ansprüche, wobei das optische Netzwerkelement ein Optical Line Terminal ist.

4. Verfahren nach einem der vorhergehenden Ansprüche, wobei das OTDR-Ereignis auf einer Wellenlänge erzeugt wird, deren zugehöriger Adressat ausgeschaltet ist.

5. Verfahren nach einem der Ansprüche 1 bis 3, wobei das OTDR-Ereignis auf einer Wellenlänge erzeugt wird, deren Menge an Datenverkehr eine vorbestimmte Schwelle unterschreitet.

6. Verfahren nach Anspruch 5, wobei das OTDR-Ereignis erzeugt wird, nachdem der Adressat informiert wurde, dass das OTDR-Ereignis übertragen wird.

7. Verfahren nach einem der vorhergehenden Ansprüche,

   - wobei ein OTDR-Ereignis auf zwei Wellenlängen erzeugt wird,
   - wobei eine Dispersion auf Basis einer Verzögerung zwischen den Reflexionen des auf dem OTDR-Ereignis basierenden Lichts bestimmt wird.

8. Verfahren nach Anspruch 7, wobei die zwei Wellenlängen eine erste Wellenlänge mit höherer Frequenz und eine zweite Wellenlänge mit niedrigerer Frequenz umfassen.

9. Verfahren nach einem der vorhergehenden Ansprüche, wobei eine Doppelbrechung auf Basis der Reflexion des auf dem OTDR-Ereignis basierenden Lichts bestimmt wird.

10. Verfahren nach einem der vorhergehenden Ansprüche,

    - wobei ein OTDR-Ereignis auf drei Wellenlängen erzeugt wird,
    - wobei eine chromatische Dispersion zweiter Ordnung auf Basis der Reflexionen des auf dem OTDR-Ereignis basierenden Lichts bestimmt wird.

11. Optisches Netzwerkelement mit einer Verarbeitungseinheit, die zur Datenübertragung mit mehreren Ausgangswellenlängen eingerichtet ist, wobei jede Ausgangswellenlänge einem Kanal zugeordnet ist, und die zur Erzeugung eines OTDR-Ereignisses auf zumindest einer der genannten Ausgangswellenlängen eingerichtet ist, wobei das optische Netzwerkelement folgendes umfasst:

    - eine Einzel-Lokaloszillator-Laserquelle (103) zum Emittieren von Licht mit einer LO-Frequenz ($f_{LO}$),

- eine Modulationsstruktur (125) zum Bereitstellen mehrerer optischer Ausgangssignale mit den genannten Ausgangswellenlängen, indem das durch den genannten Lokaloszillator (103) mit der genannten LO-Frequenz ($f_{LO}$) emittierte Licht moduliert wird, und

- einen kohärenten Empfänger (105) zum Empfangen mehrerer optischer Eingangssignale mit zugehörigen Eingangswellenlängen unter Verwendung des genannten Lokaloszillators (103) für das kohärente Detektionsschema,

- und wobei das genannte optische Netzwerkelement dazu eingerichtet ist, eine Reflexion des auf dem OTDR-Ereignis basierenden Lichts unter Verwendung desselben kohärenten Empfängers (105), der auch zum Empfangen der genannten optischen Eingangssignale verwendet wird, zu bestimmen.

12. Optisches Netzwerkelement nach Anspruch 11, wobei das optische Netzwerkelement ein zentralisiertes optisches Netzwerkelement ist, insbesondere ein Optical Line Terminal ist, das mit zumindest einer optischen Netzwerkeinheit verbindbar ist.

13. Kommunikationssystem, das mindestens eine Vorrichtung nach einem der Ansprüche 1 oder 12 umfasst.

**Revendications**

1. Procédé de traitement de signaux optiques dans un élément de réseau optique,
dans lequel ledit élément de réseau optique est agencé de manière à acheminer des données par le biais de plusieurs longueurs d'onde de sortie, dans lequel chaque longueur d'onde de sortie est affectée à un canal et dans lequel un événement de réflectométrie OTDR est généré par ledit élément de réseau optique sur au moins l'une desdites longueurs d'onde de sortie,
dans lequel ledit élément de réseau comprend :

• une source laser d'oscillateur local unique (103) destinée à émettre de la lumière à une fréquence LO ($f_{LO}$) ;
• une structure de modulation (125) destinée à fournir une pluralité de signaux de sortie optiques auxdites longueurs d'onde de sortie en modulant la lumière émise par ledit oscillateur local (103) à ladite fréquence LO ($f_{LO}$) ; et
• un récepteur cohérent (105) destiné à recevoir une pluralité de signaux d'entrée optiques à des longueurs d'onde d'entrée correspondantes, en utilisant ledit oscillateur local (103) pour la détection de cohérence ;

et dans lequel :

une réflexion de la lumière sur la base de l'événement de réflectométrie OTDR est déterminée en utilisant le même récepteur cohérent (105) que celui destiné à recevoir lesdits signaux d'entrée optiques.

2. Procédé selon la revendication 1, dans lequel l'événement de réflectométrie OTDR comprend au moins une impulsion lumineuse générée sur ladite au moins une longueur d'onde.

3. Procédé selon l'une quelconque des revendications précédentes, dans lequel l'élément de réseau optique est un terminal de ligne optique.

4. Procédé selon l'une quelconque des revendications précédentes, dans lequel l'événement de réflectométrie OTDR est généré sur une longueur d'onde pour laquelle le destinateur correspondant est hors tension.

5. Procédé selon l'une quelconque des revendications 1 à 3, dans lequel l'événement de réflectométrie OTDR est généré sur une longueur d'onde qui transporte une quantité de trafic inférieure à un seuil prédéfini.

6. Procédé selon la revendication 5, dans lequel l'événement de réflectométrie OTDR est généré après que le destinataire a été informé que l'événement de réflectométrie OTDR sera transmis.

7. Procédé selon l'une quelconque des revendications précédentes,

- dans lequel un événement de réflectométrie OTDR est généré sur deux longueurs d'onde ;
- dans lequel une dispersion est déterminée sur la base d'un retard entre les réflexions de la lumière basées sur l'événement de réflectométrie OTDR.

**8.** Procédé selon la revendication 7, dans lequel les deux longueurs d'onde comprennent une première longueur d'onde de fréquence supérieure et une seconde longueur d'onde de fréquence inférieure.

**9.** Procédé selon l'une quelconque des revendications précédentes, dans lequel une biréfringence est déterminée sur la base de la réflexion de la lumière basée sur l'événement de réflectométrie OTDR.

**10.** Procédé selon l'une quelconque des revendications précédentes,

- dans lequel un événement de réflectométrie OTDR est généré sur trois longueurs d'onde ;
- dans lequel une dispersion chromatique du second ordre est déterminée sur la base des réflexions de la lumière basées sur l'événement de réflectométrie OTDR.

**11.** Élément de réseau optique comprenant une unité de traitement qui est agencée de manière à acheminer des données par le biais de plusieurs longueurs d'onde de sortie, dans lequel chaque longueur d'onde de sortie est affectée à un canal, et à générer un événement de réflectométrie OTDR sur au moins l'une desdites longueurs d'onde de sortie, dans lequel ledit élément de réseau comprend :

• une source laser d'oscillateur local unique (103) destinée à émettre de la lumière à une fréquence LO ($f_{LO}$) ;
• une structure de modulation (125) destinée à fournir une pluralité de signaux de sortie optiques auxdites longueurs d'onde de sortie en modulant la lumière émise par ledit oscillateur local (103) à ladite fréquence LO ($f_{LO}$) ; et
• un récepteur cohérent (105) destiné à recevoir une pluralité de signaux d'entrée optiques à des longueurs d'onde d'entrée correspondantes, en utilisant ledit oscillateur local (103) pour le schéma de détection de cohérence ;

et dans lequel ledit élément de réseau optique est agencé de manière à déterminer une réflexion de la lumière sur la base de l'événement de réflectométrie OTDR, en utilisant le même récepteur cohérent (105) que celui destiné à recevoir lesdits signaux d'entrée optiques.

**12.** Élément de réseau optique selon la revendication 11, dans lequel ledit élément de réseau optique est un élément de réseau optique centralisé, en particulier un terminal de ligne optique pouvant être connecté à au moins une unité de réseau optique.

**13.** Système de communication comprenant au moins un dispositif selon l'une quelconque des revendications 1 ou 12.

**Fig.1**

# Fig.2

122

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2337240 A1
- US 5729369 A
- EP 2209226 A1